# EUROPEAN PATENT APPLICATION

(11) **EP 4 725 678 A1**
(43) Date of publication of application: **15.04.2026**
(21) Application number: 24835219.7
(22) Date of filing: 18.06.2024
(51) Int. Cl.: B29C 48/30

(54) **EXTRUSION MOLD FOR FABRICATING AEROSOL-GENERATING ARTICLE**

(30) Priority: 04.07.2023 CN 202310817076
(71) Applicant: Smoore International Holdings Limited, Grand Cayman, KY1-1111 (KY); Shenzhen Smoore Technology Limited, Shenzhen, Guangdong 518102 (CN)
(72) Inventor: DENG, Zhenyong, Shenzhen, Guangdong 518102 (CN); LIU, Ming, Shenzhen, Guangdong 518102 (CN); GUO, Conghui, Shenzhen, Guangdong 518102 (CN)
(74) Representative: V.O.
(86) International application number: PCT/CN2024/099850
(87) International publication number: WO 2025/007736

(57) **Abstract**

Embodiments of the present application provide an extrusion mold for fabricating an aerosol-generating article. The extrusion mold comprises a first form cavity and a plurality of first forming columns. The first form cavity is provided with a first side wall, the first side wall is provided with at least one extrusion gap, and the extrusion gap comprises a first extrusion gap. The plurality of first forming columns are arranged on the first side wall at intervals in the circumferential direction of the first form cavity, and each of the first forming columns protrudes towards the interior of the first form cavity, such that a first extrusion gap is defined between each two adjacent first forming columns. At least one protruding structure may be formed on a peripheral side of an aerosol-generating medium extruded by the extrusion mold of the embodiments of the present application, and the protruding structure may enable a space for releasing an aerosol on the peripheral side of the aerosol generating medium to be increased; therefore, the release path of the aerosol may be unimpeded, rapid release of the aerosol is facilitated, and the extraction efficiency of the aerosol may be further improved.

## Description

### CROSS-REFERENCE TO RELATED APPLICATION

This application is based on, and claims priority to Chinese Patent Application No. 202310817076.2, filed on July 4, 2023, the disclosure of which is hereby incorporated by reference in its entirety.

### TECHNICAL FIELD

The present disclosure relates to the technical field of die, and more particularly to an extrusion die for producing the aerosol generating article.

### BACKGROUND

In the related art, in order to meet the diversified requirements of the users, the forms of aerosol generating article are also increasingly diversified, and the forms of aerosol generating article include a filamentous form produced by the methods such as a thick slurry method and a roll pressing method, and also include an integrated form produced by the method such as an extrusion method.

However, at present, the form of aerosol generating article produced by the extrusion method is relatively single. During the heating process, the aerosol cannot be released promptly, and the extraction efficiency for the aerosol is low.

### SUMMARY

In view of the above, the embodiments of the present disclosure provides an extrusion die for producing the aerosol generating article to solve the technical problem in the related art that the aerosol generating article produced by the extrusion method has a relatively single form and a lower extraction efficiency for the aerosol.

In order to implement the above object, an embodiment of the present disclosure provides an extrusion die for producing an aerosol generating article, and the extrusion die includes:
a first cavity provided with a first sidewall, at least one type of extrusion gap being provided in the first cavity, and the extrusion gap including a first extrusion gap; and
a plurality of first shaping posts arranged on the first sidewall, the plurality of first shaping posts being arranged at intervals along a circumferential direction of the first cavity, each of the plurality of first shaping posts protruding into the first cavity, and the first extrusion gap is defined between two adjacent first shaping posts.

In an implementation, a width of each of the plurality of first shaping posts on a side close to the first sidewall is less than a width of the respective first shaping post on a side away from the first sidewall.

In an implementation, each of the plurality of first shaping posts includes a rod part and a body part, the rod part is provided between the first sidewall and the body part; and a width of the rod part is less than a width of the body part.

In an implementation, a spacing between two adjacent body parts gradually increases or remains unvaried from a side close to the first sidewall to a side away from the first sidewall.

In an implementation, a width of each of the plurality of first shaping posts gradually decreases or remains unvaried from a side close to the first sidewall to a side away from the first sidewall.

In an implementation, the plurality of first shaping posts have a same shape; or at least part of the plurality of first shaping posts have different shapes.

In an implementation, the plurality of the first shaping posts are uniformly or non-uniformly distributed along the circumferential direction of the first cavity.

In an implementation, the extrusion gap further includes a second extrusion gap and a third extrusion gap, the extrusion die further includes a second shaping post provided with a plurality of second extrusion gaps, the plurality of second extrusion gaps are disposed within the first cavity and extend in an extrusion direction of the extrusion die, the third extrusion gap in communication with a plurality of first extrusion gaps is defined between the second shaping post and the plurality of first shaping posts; the plurality of second extrusion gaps extends through the second shaping post in the extrusion direction, and each of the plurality of second extrusion gaps communicates with the third extrusion gap.

In an implementation, a side of each of the plurality of second extrusion gaps communicates with the third extrusion gap, and opposite sides of the plurality of second extrusion gap communicate with each other at a central position of the second shaping post.

In an implementation, the extrusion gap includes a fourth extrusion gap, the second shaping post is provided with a second cavity having a second sidewall, the plurality of second extrusion gaps surround a peripheral side of the second cavity and communicate with the second cavity respectively; the extrusion die further includes a third shaping post disposed within the second cavity, the third shaping post extends in the extrusion direction and the fourth extrusion gap is defined between the third shaping post and the second sidewall.

In an implementation, the extrusion gap includes a fifth extrusion gap, the extrusion die further includes a fourth shaping post disposed within the first cavity, the fourth shaping post extends in an extrusion direction of the extrusion die, and the fifth extrusion gap is defined between the fourth shaping post and a plurality of the first shaping posts, and the fifth extrusion gap communicates with the plurality of first extrusion gaps.

In an implementation, widths of all extrusion gaps are same.

In an implementation, for all extrusion gaps, at least one type of extrusion gap has a width that is less than a width of another type of extrusion gap, and a width of an extrusion gap with a minimum width is not less than 70% of a width of an extrusion gap with a maximum width.

In an implementation, a width of each extrusion gap is in a range of 0.1mm to 1.2mm.

In an implementation, the extrusion die further includes a first die, and the first die is provided with the first cavity and a plurality of first shaping posts.

In an implementation, one end of the first cavity is provided with a discharge outlet, and the plurality of first shaping posts are disposed at the discharge outlet.

In an implementation, the extrusion gap includes a second extrusion gap and a third extrusion gap, the extrusion die includes a second die provided with a second shaping post, the second shaping post has a plurality of second extrusion gaps, the plurality of second extrusion gaps extend through the second shaping post in an extending direction of the second shaping post, and each of the plurality of second extrusion gaps extends through an outer sidewall of the second shaping post.

The second die is connected with the first die, the second shaping post protrudes into the first cavity, a third extrusion gap is defined between the second shaping post and a plurality of first shaping posts, and the third extrusion gap communicates with the plurality of first extrusion gaps and the plurality of second extrusion gaps, respectively.

In an implementation, the extrusion gap includes a fourth extrusion gap, the second shaping post is provided with a second cavity having a second sidewall, and the plurality of second extrusion gaps surround a peripheral side of the second cavity.

The extrusion die further includes a third die provided with a third shaping post, the third die is connected with the second die, the third shaping post extends into the second cavity, and a fourth extrusion gap is defined between the third shaping post and the second sidewall.

In an implementation, the extrusion gap further includes a fifth extrusion gap, the extrusion die further comprises a fourth die provided with a fourth shaping post, the fourth shaping post connects with the first die, the fourth shaping post extends into the first cavity, a fifth extrusion gap is defined between the fourth shaping post and a plurality of the first shaping posts and the fifth extrusion gap communicates with the plurality of first extrusion gaps.

The embodiments of the present disclosure provide an extrusion die for manufacturing the aerosol generating article. The extrusion die is provided with a first cavity and a plurality of first shaping posts, and the plurality of first shaping posts are arranged on the first sidewall of the first cavity and are arranged at intervals along the circumferential direction of the first cavity. Each first shaping post protrudes into the first cavity such that a first extrusion gap is defined between two adjacent first shaping posts. During the process of extruding the aerosol generating substrate by the extrusion die, part of the material passes through the first extrusion gaps so that at least one protrusion structure may be formed on the outer peripheral side of the extruded aerosol generating substrate. That is, the cross-sectional shape of the aerosol generating substrate is no longer a conventional circular or polygonal shape, but is in a form in which a partial area of the outer contour protrudes outward. The space for releasing aerosol may be increased on the outer peripheral side of the aerosol generating substrate by providing the protrusion structure. For example, when there is one protrusion structure, the space located on the two opposite sides of the protrusion structure along the circumferential direction of the aerosol generating substrate is the increased space for releasing aerosol. When there are a plurality of protrusion structures, the spaces formed between every two adjacent protrusion structures serve as the increased space for releasing aerosol. These increased spaces may unblock the release path for the aerosol to facilitate the rapid aerosol release, thereby effectively improving the extraction efficiency for the aerosol.

### BRIEF DESCRIPTION OF THE DRAWINGS

FIG. 1 is a schematic structural diagram of a first type of extrusion die according to an embodiment of the present disclosure, and an aerosol generating substrate is illustrated in FIG. 1.
FIG. 2 is an exploded view of the extrusion die illustrated in FIG. 1.
FIG. 3 is a schematic structural diagram of the extrusion die illustrated in FIG. 1 from another perspective.
FIG. 4 is a schematic structural diagram of the extrusion die illustrated in FIG. 1 from yet another perspective.
FIG. 5 is a partial enlarged diagram of section A of the extrusion die illustrated in FIG. 4.
FIG. 6 is a schematic structural diagram of a first die illustrated in FIG. 1.
FIG. 7 is a schematic structural diagram of a second die illustrated in FIG. 1.
FIG. 8 is a schematic structural diagram of a third die illustrated in FIG. 1.
FIG. 9 is a sectional view of the extrusion die illustrated in FIG. 1.
FIG. 10 is a schematic structural diagram of the aerosol generating substrate illustrated in FIG. 1.
FIG. 11 is a schematic cross-sectional view of the aerosol generating substrate illustrated in FIG. 10.
FIG. 12 is a schematic structural diagram of a second type of extrusion die according to an embodiment of the present disclosure.
FIG. 13 is a schematic cross-sectional view of an aerosol generating substrate extruded by the extrusion die illustrated in FIG. 12.
FIG. 14 is a schematic structural diagram of a third type of extrusion die according to an embodiment of the present disclosure.
FIG. 15 is an exploded view of the extrusion die illustrated in FIG. 14.
FIG. 16 is a schematic structural diagram of the extrusion die illustrated in FIG. 14 from another perspective.
FIG. 17 is a sectional view of the extrusion die illustrated in FIG. 14.
FIG. 18 is a schematic cross-sectional view of an aerosol generating substrate extruded by the extrusion die illustrated in FIG. 14.
FIG. 19 is a schematic structural diagram of a fourth type of extrusion die according to an embodiment of the present disclosure.
FIG. 20 is an exploded view of the extrusion die illustrated in FIG. 19.
FIG. 21 is a schematic structural diagram of the extrusion die illustrated in FIG. 19 from another perspective.
FIG. 22 is a sectional view of the extrusion die illustrated in FIG. 19.
FIG. 23 is a schematic cross-sectional view of an aerosol generating substrate extruded by the extrusion die illustrated in FIG. 19.

### DETAILED DESCRIPTION

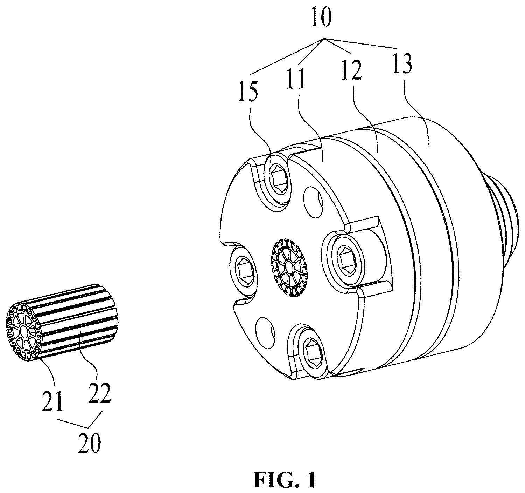

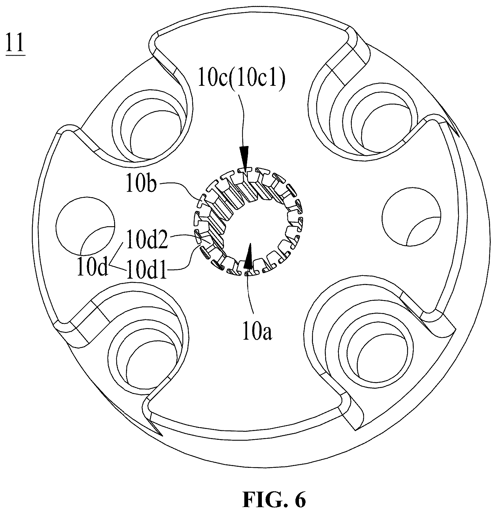

The embodiments of the present disclosure provide an extrusion die 10 for producing the aerosol generating article. Referring to FIG. 1 to FIG. 6, the extrusion die 10 includes a first cavity 10a and a plurality of first shaping posts 10d.

The first cavity 10a is provided with a first sidewall 10b, at least one type of extrusion gap 10c is provided in the first cavity 10a, and the extrusion gap 10c includes a first extrusion gap 10c1. A plurality of first shaping posts 10d are arranged on the first sidewall 10b and are arranged at intervals along the circumferential direction of the first cavity 10a. Each of the plurality of first shaping posts 10d protrudes into the first cavity 10a, and the first extrusion gap 10c1 is defined between two adjacent first shaping posts 10d.

The aerosol generating article is used in conjunction with an electronic atomization device provided with a heating assembly. Specifically, the aerosol generating article mainly includes the aerosol generating substrate 20, and the heating assembly heats and atomizes the aerosol generating substrate 20 to produce the aerosol for consumption by a user or for use in medicine, cosmetics, or the like.

There are various heating manners for the heating assembly. For example, the heating manners include the central heating and the peripheral heating. The central heating manner indicates that the heating assembly is inserted into the interior of the aerosol generating substrate 20 to bake and heat the aerosol generating substrate 20 from the inside to the outside. The circumferential heating manner indicates that the heating assembly is disposed on the periphery of the aerosol generating substrate 20 to bake and heat the aerosol generating substrate 20 from the outside to the inside. These heating manners may specifically include the resistance heating, the electromagnetic heating, the infrared heating, the microwave heating, the laser heating, etc, which is not limited herein.

The extrusion die 10 provided by the embodiments of the present disclosure is used in conjunction with an extruder, such as a hydraulic plunger extruder, a twin-screw extruder, a single-screw extruder, or the like, to produce all or part of the aerosol generating article by performing extrusion molding on the material.

The extrusion molding refers to a processing method in which the material is added into an extruder, the material is pushed forward by a screw under the action of the barrel and the screw of the extruder, and continuously passes through the extrusion die at the outlet of the extruder, to form the articles or semi-finished articles with various cross-sections. The material formed by performing extrusion molding is in a strip shape.

The embodiments of the present disclosure are described by taking the aerosol generating substrate 20 in the aerosol generating article produced by the extrusion die 10 as an example. It is to be noted that the aerosol generating article may only include the aerosol generating substrate 20 or may be a combination of the aerosol generating substrate 20 and other structures. For example, the aerosol generating article may also be provided with a functional segment at one end of the aerosol generating substrate 20 according to the requirements, and the functional segment may only have a filtering function or have both the filtering and cooling functions. In some embodiments, all or part of the functional segment may also be manufactured by the extrusion die according the embodiment of the present disclosure.

The specific structure of the aerosol generating substrate 20 is not limited herein. Exemplarily, in an embodiment, the aerosol generating substrate 20 may be made from the atomizing substrate itself, such as such as a smoking flavor substrate. In some other embodiments, the aerosol generating substrate 20 may also include a substrate and an atomizing substrate arranged on the substrate, and the substrate may be, for example, high-temperature resistant carbon fiber. Thus, by providing the substrate, the strength of the aerosol generating substrate 20 may be improved, and it may withstand a certain degree of high temperature without producing peculiar smells.

The specific compositions of the aerosol generating substrate 20 are not limited herein. Exemplarily, in an embodiment, the aerosol generating substrate 20 may include the plant component, the auxiliary component, the smoking agent component, the adhesive component, etc.

In an embodiment, the plant component is one or a combination of more of: the powders formed by crushing the tobacco leaf raw materials, tobacco leaf fragments, tobacco stems, tobacco dust, fragrant plants, etc. The plant component is the core source of the flavor of the article. The endogenous substance in the plant component, such as nicotine, enters the human blood through atomization, such that the pituitary gland is promoted to produce the dopamine, thereby providing physiological satisfaction.

In an embodiment, the auxiliary component may be one or a combination of more of: the inorganic filler, the lubricant, and the emulsifier. The inorganic filler includes one or a combination of more of the heavy calcium carbonate, the light calcium carbonate, the zeolite, the attapulgite, the talc powder, and the diatomite. The inorganic filler may provide the skeleton support for the plant component. The inorganic filler also has micropores, which may increase the porosity of the wall material after the formation of the plant component, such that the aerosol release rate is improved.

The lubricant includes one or a combination of more of: the candle wax, the carnauba wax, the shellac, the sunflower wax, the rice bran, the beeswax, the stearic acid, and the palmitic acid. The lubricant may increase the fluidity of particles, reduce the friction between the particles, and enable the overall density of the particles to be more uniform, and may also reduce the pressure required for molding, and reduce the mold wear.

The emulsifier includes one or a combination of more of: the polyglycerol fatty acid esters, Tween-80, and polyvinyl alcohol. The emulsifier may, to some extent, slow down the loss of flavor substances during storage, increase the stability of the flavor substances, and improve the sensory quality of the product. The emulsifier (also referred to as surfactant) may reduce the interfacial tension between the water-soluble component and the water-insoluble component in the mixed system, and form a robust film on the surface of the droplets or form an electric double layer on the surface of the droplets due to the charge provided by the emulsifier, to prevent the droplets from aggregating with each other and maintain a uniform emulsion. The emulsification and homogenization for two immiscible components may improve the consistency of the article quality.

The function of the smoking agent component is to generate a large amount of vapor when heating, thereby increasing the amount of smoke of the smoking article. In an embodiment, the smoking agent may include, for example, one or a combination of more of: monohydric alcohol (such as menthol), polyol (such as propylene glycol, glycerol, triethylene glycol, 1,3-butanediol and tetraethylene glycol); ester of polyol (such as glyceryl triacetate, triethyl citrate, glyceryl diacetate mixtures, triethyl citrate, benzyl benzoate, tributyrate), monocarboxylic acid, polycarboxylic acid (such as lauric acid, myristic acid) or aliphatic ester of polycarboxylic acid (such as dimethyl dodecanedioate, dimethyl tetradecanedioate, erythritol, 1,3-butanediol, tetraethylene glycol, triethyl citrate, propylene carbonate, ethyl laurate, Triactin, meso-erythritol, glyceryl diacetate mixture, diethyl suberate, triethyl citrate, benzyl benzoate, benzyl phenylacetate, ethyl vanilate, glyceryl tributyrate, lauryl acetate).

In an embodiment, the adhesive component is a natural plant extract and non-ionically modified viscous polysaccharide, which includes one or a combination of more of: tamarind polysaccharide, pullulan polysaccharide, seaweed polysaccharide, locust bean gum, guar gum, and xyloglucan. The adhesive is in close contact with the interface of the component material of the article by wetting, such that the intermolecular attraction is generated, thereby playing the role of binding the powder, liquid, etc. of the component material. Meanwhile, the selection of the natural plant extract and non-ionically modified adhesive may avoid the release of harmful substances, such as methanol, formaldehyde and acrolein, caused by colloid modification, such that the safety of articles is improved.

Exemplarily, the aerosol generating substrate 20 may be a particle combination, and the particle combination is a restructured tobacco substrate, for example, containing the components such as smoking agent, tobacco, etc. The aerosol generating substrate 20 in form of the particle combination remains an integrated substrate during and after heating and inhalation, such that the case of disintegration and falling is not easy to occur. Thus it is solved the problems in the related art that the cases for the aerosol generating substrate in the form of sheet, filament or loose particles occur, such as sheet loosening, filament component or particle component falling off, and difficulty in cleaning.

The first sidewall 10b of the first cavity 10a defines the outer contour of the first cavity 10a. The extrusion gap 10c is a passage through which the material passes during the extrusion process.

The number of first shaping posts 10d is at least two, the first shaping posts 10d protrude from the first sidewall 10b into the first cavity 10a, and the first extrusion gap 10c1 is defined by the two adjacent first shaping posts 10d, that is, the number of the first extrusion gaps 10c1 is at least one.

Referring to FIG. 1 to FIG. 4, FIG. 10, and FIG. 11, during the extrusion process, part of the material passes through the first extrusion gap 10c1, such that the aerosol generating substrate 20 molded by extruding through the extrusion die 10 forms with the substrate body 21 and the protrusion structure 22, and the protrusion structure 22 is located on the outer peripheral side of the substrate body 21. That is, the purpose of providing the first extrusion gap 10c1 is to form the protrusion structure 22.

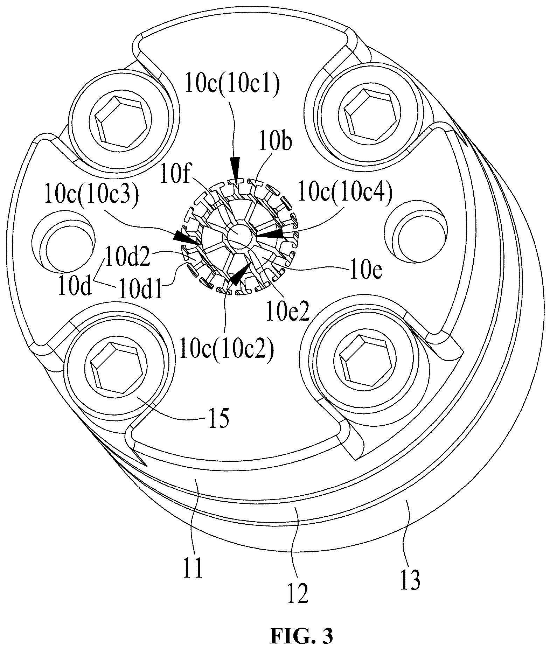

Referring to FIG. 3, FIG. 10, and FIG. 11, when the number of first shaping posts 10d is great, the number of protrusion structures 22 located on the outer peripheral side of the aerosol generating substrate 20 is also relatively great, and these protrusion structures 22 are arranged around the outer peripheral side of the aerosol generating substrate 20 to form a tooth shape.

In FIG. 1 to FIG. 4, the external shapes of the plurality of first shaping posts 10d are the same. That is, all of the first shaping posts 10d have the same size and shape. In some other embodiments, at least part of the plurality of first shaping posts 10d may have different external shapes, that is, the external shapes of all first shaping posts 10d are different. That is, at least one of the size or the shape of each first shaping post 10d is different from that of other first shaping posts 10d. Alternatively, only part of the first shaping posts 10d may have different shapes, that is, at least one of the sizes or the shapes of the part of the first shaping posts 10d are different from that of other first shaping posts 10d, and the other shaping posts 10d have the same size and shape.

In addition, a plurality of first shaping posts 10d may be uniformly distributed along the circumferential direction of the first cavity 10a as illustrated in FIG. 3. That is, the spacing between any two adjacent first shaping posts 10d at the same position is the same, or all of the first extrusion gaps 10c1 have the same size and shape. The plurality of first shaping posts 10d may also be non-uniformly distributed along the circumferential direction of the first cavity 10a. That is, the spacings between at least some adjacent first shaping posts 10d at the same position are different from the spacing between other two adjacent first shaping posts 10d at the same position, or at least one of the sizes or the shapes of at least some first extrusion gaps 10c1 are different from that of other first extrusion gaps 10c1.

In the related art, the aerosol generating substrate mold by extruding through an extrusion die generally has a cylindrical shape with a circular cross-section or a prismatic shape with a polygonal cross-section, and the aerosol generating substrate has a relatively single form. Therefore, the aerosol generating articles finally produced also have a relatively single form. However, the form of the aerosol generating article has a significant impact on the heating effect and inhalation experience. However, the aerosol cannot be released promptly during the heating process of the aerosol generating articles in the related art, and the extraction efficiency for the aerosol is low.

The extrusion die 10 according to the embodiments of the present disclosure is provided with a first cavity 10a and a plurality of first shaping posts 10d, and the plurality of first shaping posts 10d are provided on the first sidewall 10b of the first cavity 10a and are arranged at intervals along the circumferential direction of the first cavity 10a. Each of the plurality of first shaping posts 10d protrudes into the first cavity 10a such that a first extrusion gap 10c1 is defined between two adjacent first shaping posts 10d. During the process of extruding the aerosol generating substrate 20 by the extrusion die 10, part of the material passes through the first extrusion gap 10c1 so that at least one protrusion structure 22 may be formed on the outer peripheral side of the extruded aerosol generating substrate 20. That is, the cross sectional shape of the aerosol generating substrate 20 is no longer a conventional circular or polygonal shape, but is in a form in which a partial area of the outer contour protrudes outward. The space for releasing aerosol may be increased on the outer peripheral side of the aerosol generating substrate 20 by providing the protrusion structure 22. For example, when there is one protrusion structure 22, the space located on the two opposite sides of the protrusion structure 22 along the circumferential direction of the aerosol generating substrate 20 is the increased space for releasing aerosol. When there are a plurality of protrusion structures 22, the spaces formed between every two adjacent protrusion structures 22 serve as the increased space for releasing aerosol. These increased spaces may unblock the release path for the aerosol to facilitate the rapid aerosol release, thereby effectively improving the extraction efficiency for the aerosol.

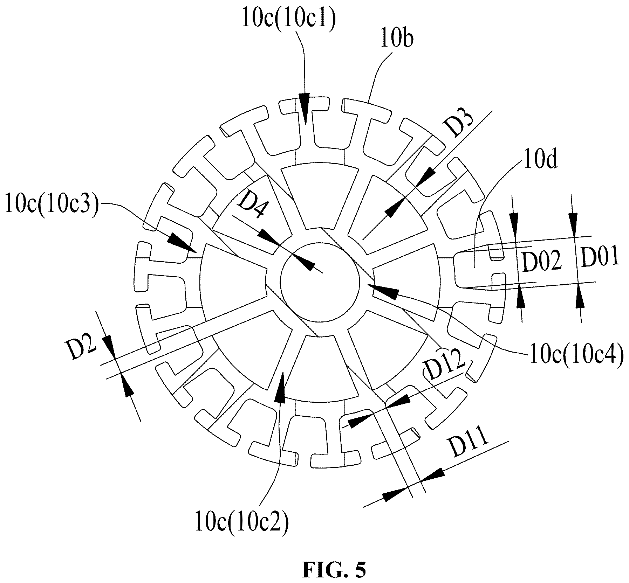

In an embodiment, referring to FIG. 5, the width D01 of the first shaping post 10d on the side close to the first sidewall 10b may be less than the width D02 of the first shaping post 10d on the side away from the first sidewall 10b.

The width of the first shaping post 10d refers to the distance between two opposing surfaces of the first shaping post 10d in the circumferential direction of the extrusion die 10.

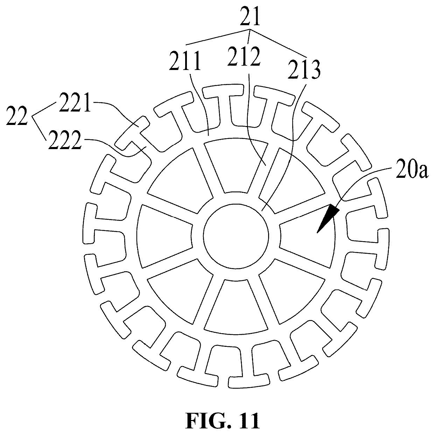

That is, the width D11 of the first extrusion gap 10c1 on the side close to the first sidewall 10b is greater than the width D12 of the first extrusion gap 10c1 on the side away from the first sidewall 10b as illustrated in FIG. 5. Accordingly, referring to FIG. 11, the width of the portion of the protrusion structure 22 of the aerosol generating substrate 20 away from the center of the aerosol generating substrate 20 is relatively wide, and the width of the portion close to the center of the aerosol generating substrate 20 is relatively narrow. This arrangement may further increase the space for aerosol release.

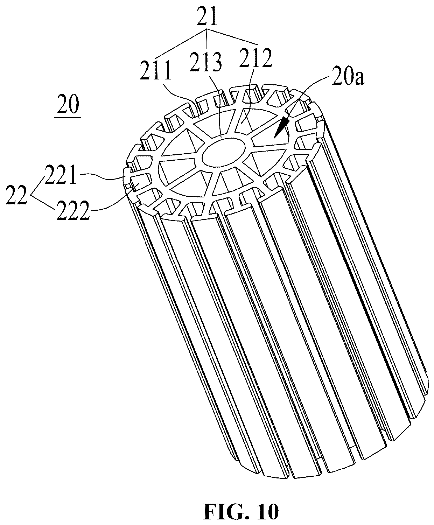

In an embodiment, referring to FIG. 3 to FIG. 5, the first shaping post 10d may include a rod part 10d1 and a body part 10d2, and the rod part 10d1 is located between the first sidewall 10b and the body part 10d2. The width of the rod part 10d1 is less than the width of the body part 10d2. That is, on the projection plane perpendicular to the extrusion direction, the projection of the first extrusion gap 10c1 is substantially "T" shape. Accordingly, the protrusion structure 22 on the aerosol generating substrate 20 forms a "T" shape composed of the lateral extending segment 221 and the vertically extending segment 222 illustrated in FIG. 10 and FIG. 11. As such, the two sides of the "T"-shaped protrusion structure 22 of the aerosol generating substrate 20 may form a larger space, such that the release and flow for the aerosol are smoother.

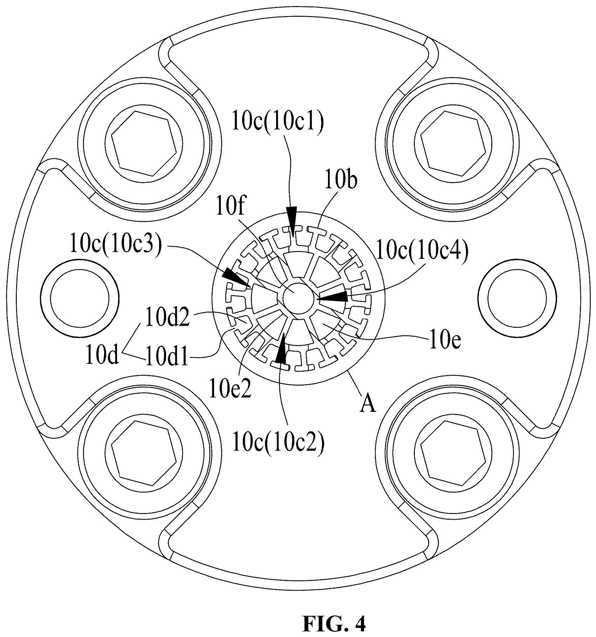

In an embodiment, referring to FIG. 4 and FIG. 11, the distance between two adjacent body parts 10d2 may remain unchanged from the side close to the first sidewall 10b to the side away from the first sidewall 10b. That is, the area of the first extrusion gap 10c1 that is located between two adjacent body parts 10d2 has a uniform width structure, or the vertically extending segment 222 of the protrusion structure 22 of the aerosol generating substrate 20 has a uniform width structure as illustrated in FIG. 11, and this type of vertically extending segment 222 may reduce the probability of cracking or fracture at the junction of the protrusion structure 22 and the substrate body 21.

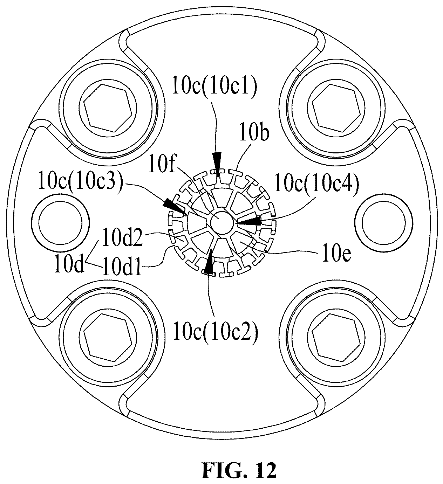

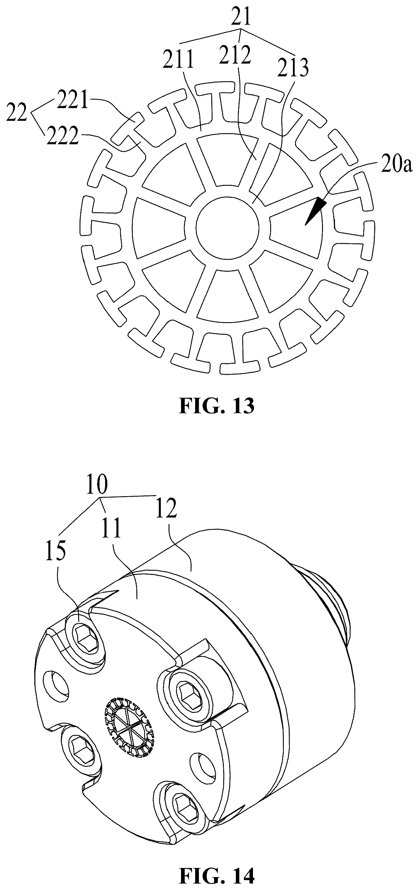

In another embodiment, referring to FIG. 12 and FIG. 13, the distance between the two adjacent body parts 10d2 may gradually increase from the side close to the first sidewall 10b to the side away from the first sidewall 10b. That is, the width of the region of the first extrusion gap 10c1 that is located between the two adjacent body parts 10d2 gradually increases from the side close to the first sidewall 10b to the side away from the first sidewall 10b, or the width of the vertical extending segment 222 of the protrusion structure 22 of the aerosol generating substrate 20 gradually increases from one end close to the lateral extending segment 221 to the other end away from the lateral extending segment 221, as illustrated in FIG. 12. Therefore, the width of the part where the vertically extending segment 222 connects with the substrate body 21 is relatively great, thereby more effectively preventing cracking or even fracturing at the junction of the protrusion structure 22 and the substrate body 21.

In some embodiments, the width of the first shaping post 10d may also gradually increase from the side close to the first sidewall 10b to the side away from the first sidewall 10b, and it indicates that the width of the first shaping post 10d varies continuously.

In addition, it is to be noted that the width of the first shaping post 10d is not limited to that the width on the side close to the first sidewall 10b is less than the width on the side away from the first sidewall 10b. For example, the width of the first shaping post 10d may gradually decrease from the side close to the first sidewall 10b to the side away from the first sidewall 10b. That is, the width of the part where the protrusion structure 22 connects with the substrate body 21 is relatively great, and for example, the plurality of protrusion structures 22 may form a wavy shape together.

Exemplarily, the width of the first shaping post 10d may also remain unchanged from the side close to the first sidewall 10b to the side away from the first sidewall 10b. That is, the first shaping post 10d has a uniform width structure. For example, the first shaping post 10d may be rectangular.

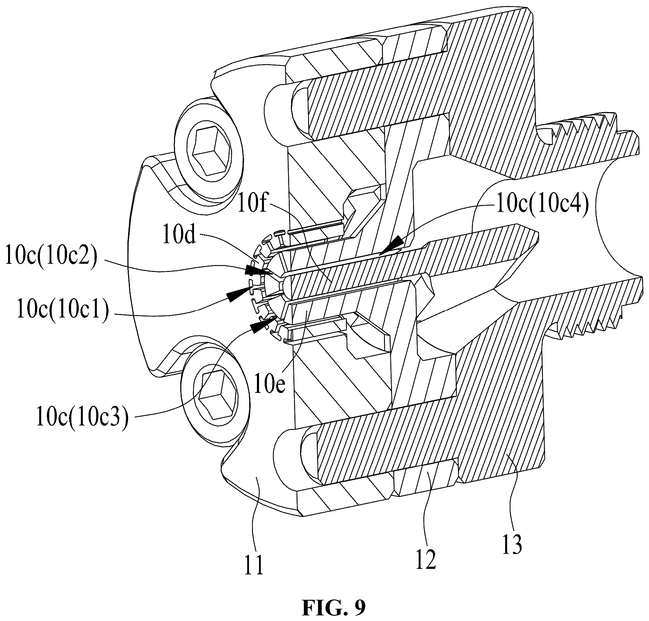

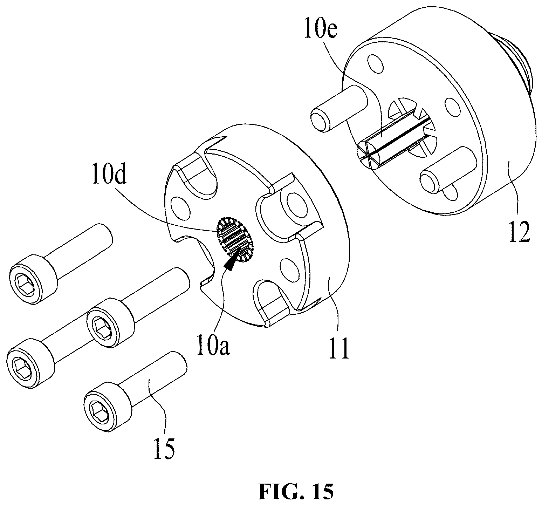

In an embodiment, referring to FIG. 4, FIG. 5, FIG. 9, FIG. 14 to FIG. 17, the extrusion gap 10c may include a second extrusion gap 10c2 and a third extrusion gap 10c3. The extrusion die 10 includes a second shaping post 10e having a plurality of second extrusion gaps 10c2. The second shaping post 10e is disposed in the first cavity 10a and extends in the extrusion direction of the extrusion die 10. The third extrusion gap 10c3 communicating with the first extrusion gaps 10c1 is defined between the second shaping post 10e and the plurality of first shaping posts 10d. The second extrusion gap 10c2 extends through the second shaping post 10e in the extrusion direction, and each of the second extrusion gaps 10c2 communicates with the third extrusion gap 10c3.

Specifically, during the extrusion process, part of the material passes through the third extrusion gap 10c3 to form the first annular structure 211 as illustrated in FIG. 10, FIG. 11 and FIG. 18. The first annular structure 211 is a portion of the substrate body 21 of the aerosol generating substrate 20, the outer surface of the first annular structure 211 facing the protrusion structure 22 is equivalent to the outer sidewall of the substrate body 21. Part of the material passes through the second extrusion gap 10c2 to form the support rib 212 located inside the substrate body 21 as illustrated in FIG. 10, FIG. 11 and FIG. 18, and the area between the support ribs 212 forms the airflow passage 20a inside the substrate body 21. The airflow passage 20a inside the aerosol generating substrate 20 may increase the flow velocity of the airflow in the aerosol generating substrate 20, so that the impact force of the airflow may be improved, and the aerosol may be uniformly mixed, thereby improving the extraction efficiency and uniformity for the aerosol in the aerosol generating substrate 20. The supporting rib 212 may provide a better support function within the aerosol generating substrate 20, so as to improve the stability of the overall structure of the aerosol generating substrate 20 while maximizing the cross-sectional dimension of the airflow passage 20a.

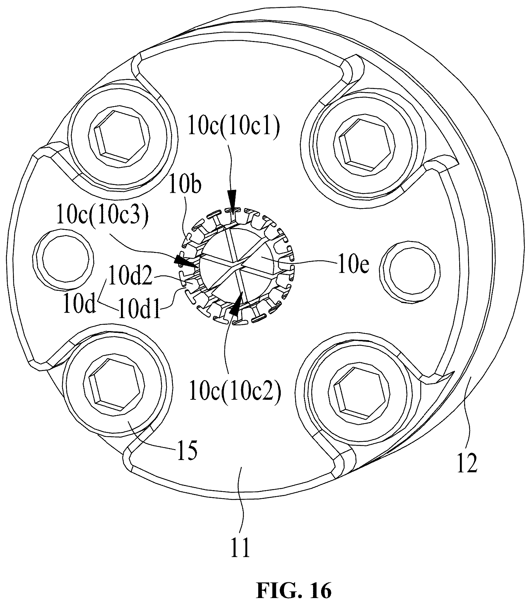

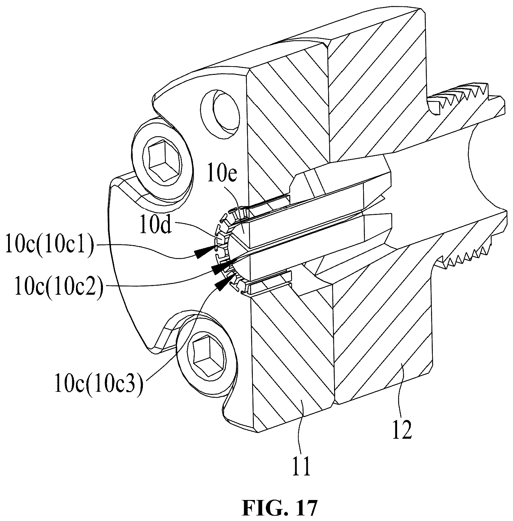

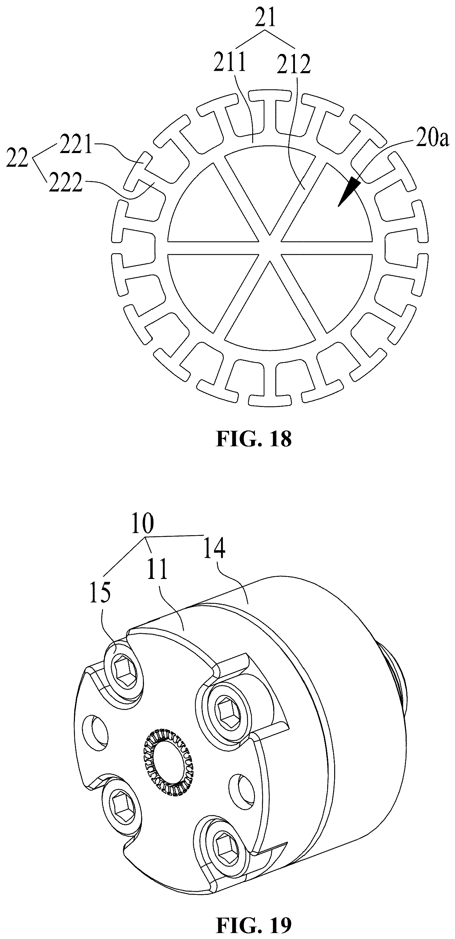

For example, referring to FIG. 16 and FIG. 17, one side of each of the plurality of second extrusion gaps 10c2 communicates with the third extrusion gap 10c3, and the opposite sides of the plurality of second extrusion gaps 10c2 may communicate with each other at the central position of the second shaping post 10e, which corresponds to that the support ribs 212 of the aerosol generating substrate 20 radiates outward from the center position of the second shaping post 10e as illustrated in FIG. 18. The aerosol generating substrate 20 with this structural form has high strength and better stability, and the cross-sectional dimension of the airflow passage 20a is relatively great.

In some other embodiments, the second extrusion gaps 10c2 may also be arranged in other forms. For example, the second extrusion gaps 10c2 may be arranged parallel or intersecting with each other as long as they can communicate with the third extrusion gap 10c3.

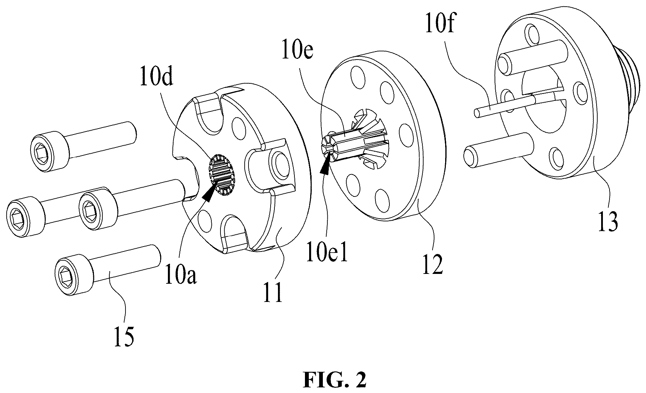

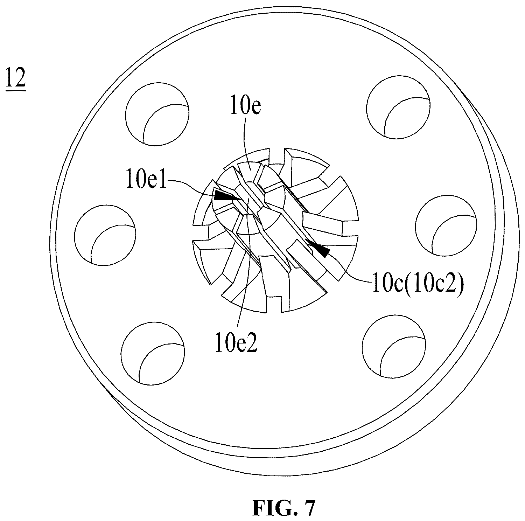

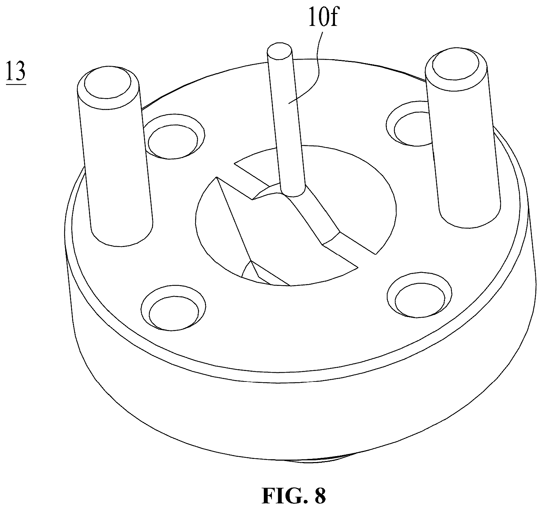

In an embodiment, referring to FIG. 2 to FIG. 4 and FIG. 7 to FIG. 9, the extrusion gap 10c may further include a fourth extrusion gap 10c4. The second shaping post 10e may be provided with a second cavity 10e1 having a second sidewall 10e2, and a plurality of second extrusion gaps 10c2 surround the periphery of the second cavity 10e1 and communicate with the second cavity 10e1, respectively. The extrusion die 10 includes a third shaping post 10f disposed within the second cavity 10e1, the third shaping post 10f extends in the extrusion direction and a fourth extrusion gap 10c4 is defined between the third shaping post 10f and the second sidewall 10e2.

That is, each of the plurality of second extrusion gap 10c2 communicates with the fourth extrusion gap 10c4. During the extrusion process, part of the material passes through the fourth extrusion gap 10c4 to form the second annular structure 213 positioned inside the substrate body 21 as illustrated in FIG. 10 and FIG. 11. The inside of the second annular structure 213 forms an airflow passage 20a, each support rib 212 is connected to the second annular structure 213, and other airflow passages 20a are defined between the first annular structure 211, the second annular structure 213 and two adjacent support ribs 212. The aerosol generating substrate 20 with this structural form also has the characteristics of high strength and better stability, and the cross-sectional dimension of the airflow passage 20a is relatively great.

Further, for the heating manner of central heating, the heating assembly may also be inserted into the airflow passage 20a located within the second annular structure 213 to bake and heat the aerosol generating substrate 20 from the inside to the outside.

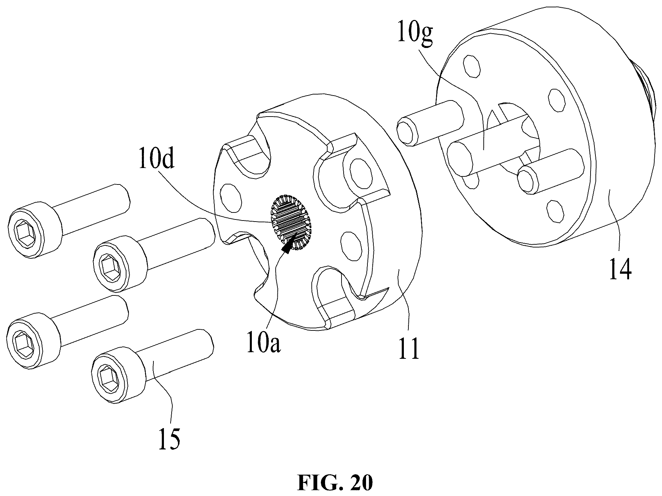

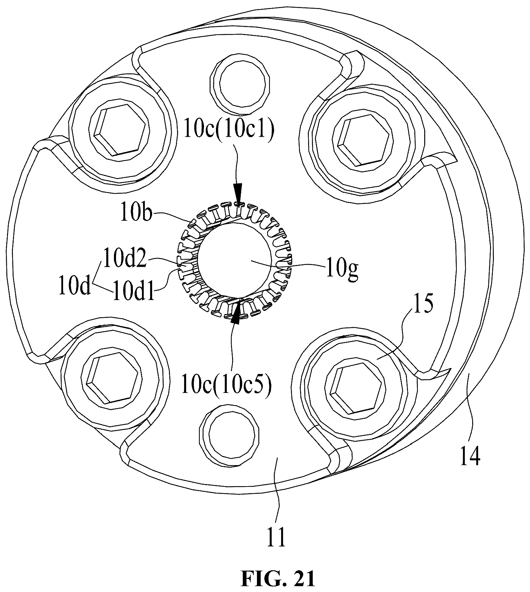

In an embodiment, referring to FIG. 19 to FIG. 22, the extrusion gap 10c may include a fifth extrusion gap 10c5. A fourth shaping post 10g may be arranged in the first cavity 10a of the extrusion die 10, the fourth shaping post 10g extends in the extrusion direction of the extrusion die 10, and the fifth extrusion gap 10c5 communicating with the first extrusion gaps 10c1 is defined between the fourth shaping post 10g and the plurality of first shaping posts 10d.

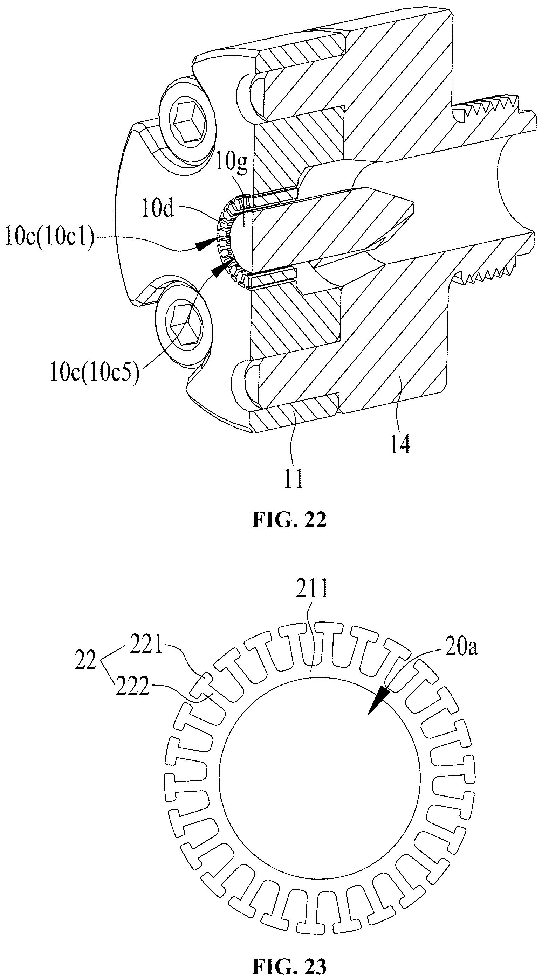

Specifically, in the extrusion process, part of the material passes through the fifth extrusion gap 10c5, and the first annular structure 211 illustrated in FIG. 23 may also be formed, except that there is no support rib 212 inside the substrate body 21 of the aerosol generating substrate 20, but only an airflow passage 20a with a great cross-sectional size.

In addition, when the widths of different extrusion gaps 10c differ greatly, the pressure at the extrusion gaps 10c cannot be kept relatively uniform. That is, the pressure at some extrusion gaps 10c is high, while the pressure at some other extrusion gaps 10c is low, and the material is easy to be extruded from the extrusion gap 10c with a lower pressure, and is difficult or even impossible to be extruded from the extrusion gap 10c with a higher pressure. Therefore, in order to ensure that the pressure at the extrusion gaps 10c is relatively uniform to avoid that the material is extruded only from the extrusion gaps 10c with a lower pressure, which would reduce the qualified rate of the aerosol generating substrate 20, the widths of all the extrusion gaps 10c should be substantially same or similar.

Exemplarily, for all the extrusion gaps 10c, the width of at least one type of extrusion gap 10c may be less than the width of another type of extrusion gap 10c. The width of the extrusion gap 10c refers to the distance between two opposing sidewalls of the extrusion gap 10c. The width of the extrusion gap 10c with the minimum width is not less than 70% of the width of the extrusion gap 10c with the maximum width. For example, when the width of the extrusion gap 10c with the maximum width is 1 mm, the width of the extrusion gap 10c with the minimum width may be equal to 0.7 mm, or may be greater than 0.7 mm and less than 1 mm.

Taking the extrusion die 10 illustrated in FIG. 5 as an example, at least one of: the widths D11 and D12 of the first extrusion gap 10c1, the width D2 of the second extrusion gap 10c2, the width dimension D3 of the third extrusion gap 10c3, or the width dimension D4 of the fourth extrusion gap 10c4 illustrated in FIG. 5 may be less than the width of another type of extrusion gap 10c. For example, in FIG. 5, the width D2 of the second extrusion gap 10c2, the width dimension D3 of the third extrusion gap 10c3, and the width dimension D4 are the same, and the width D1 of the first extrusion gap 10c1 is relatively less. Therefore, any one of the second extrusion gap 10c2, the third extrusion gap 10c3, or the fourth extrusion gap 10c4 may be considered as the extrusion gap 10c with the maximum width, while the first extrusion gap 10c1 is the extrusion gap 10c with the minimum width. Taking the second extrusion gap 10c2 as an example, the width D1 of the first extrusion gap 10c1 is not less than 70% of the width D2 of the second extrusion gap 10c2.

It is to be noted that, if the extrusion gap 10c with the minimum width has a uniform width structure, the width of the extrusion gap 10c has only one value, which means that the widths at all positions of the extrusion gap 10c are the same. If the extrusion gap 10c with the minimum width dimension has a non-uniform width structure, that is, the width at some positions of the extrusion gap 10c is relatively great and the width at some positions is relatively less, the width of the extrusion gap 10c refers to the minimum value among all the widths thereof.

Similarly, if the extrusion gap 10c with the maximum width is a uniform width structure, the width of the extrusion gap 10c has only one value. If the extrusion gap 10c with the maximum width is a non-uniform width structure, the width of the extrusion gap 10c refers to the maximum value among all the widths thereof.

For example, the width of the extrusion gap 10c with the minimum width may be 70%, 80%, 85%, 90% or 95% of the width of the extrusion gap 10c with the maximum width.

In some other embodiments, the widths of all extrusion gaps 10c in the extrusion die 10 may be the same. Taking the extrusion die 10 illustrated in FIG. 5 as an example, it means that the width D1 of the first extrusion gap 10c1, the width D2 of the second extrusion gap 10c2, the width D3 of the third extrusion gap 10c3, and the width D4 of the fourth extrusion gap 10c4 in FIG. 5 may all be the same. That is, each type of extrusion gap 10c is a uniform width structure regardless of how many types of extrusion gaps 10c are provided, and the widths of all types of extrusion gap 10c are the same, which indicates that the parts of the aerosol generating substrate 20 corresponding the extrusion gaps 10c have the same width.

In addition, regardless of whether the widths of all extrusion gaps are the same or not, the width of each extrusion gap may preferably be in the range of 0.1 mm to 1.2 mm. For example, the width of an extrusion gap may be 0.1 mm, 0.3 mm, 0.5 mm, 0.75 mm, 0.9 mm, 1.1 mm, or 1.2 mm.

In an embodiment, referring to FIG. 1 to FIG. 3 and FIG. 6, the extrusion die 10 may include a first die 11, and the first die 11 is provided with a first cavity 10a and a plurality of first shaping posts 10d.

For example, referring to FIG. 1 to FIG. 3, FIG. 6 and FIG. 9, one end of the first cavity 10a is provided with a discharge outlet (not shown). The discharge outlet is an outlet through which the material is extruded from the extrusion die 10, and a plurality of first shaping posts 10d may be provided at the discharge outlet. That is, the protrusion structure 22 is formed when the material passes through the discharge outlet.

In an embodiment, referring to FIG. 1 to FIG. 4, FIG. 7, and FIG. 9, the extrusion die 10 may include a second die 12 provided with a second shaping post 10e, the second shaping post 10e is provided with a plurality of second extrusion gaps 10c2, the second extrusion gaps 10c2 extend through the second shaping post 10e along the extending direction of the second shaping post 10e, and each of the second extrusion gaps 10c2 extends through the outer sidewall of the second shaping post 10e. The second die 12 is connected to the first die 11, and the second shaping post 10e extends into the first cavity 10a. It is to be understood that after the second shaping post 10e extends into the first cavity 10a, the extending direction of the second shaping post 10e is the same as the extrusion direction of the extrusion die 10. A third extrusion gap 10c3 is defined between the second shaping post 10e and the plurality of first shaping post 10d, and the third extrusion gap 10c3 communicates with the first extrusion gaps 10c1 and the second extrusion gaps 10c2.

The second die 12 and the first die 11 may be detachably connected with each other. For example, the second die 12 and the first die 11 shown in FIG. 1 are fastened and connected by the bolts 15. In some other embodiments, the second die 12 and the first die 11 may also be non-detachably connected with each other. For example, the second die 12 may be welded to the first die 11.

After the second die 12 is connected to the first die 11, the second shaping post 10e extends into the first cavity 10a, such that a third extrusion gap 10c3 is formed.

In an embodiment, referring to FIG. 1 to FIG. 4 and FIG. 7 to FIG. 9, the second shaping post 10e is provided with a second cavity 10e1 having a second sidewall 10e2, and a plurality of second extrusion gaps 10c2 surround the periphery of the second cavity 10e1. The extrusion die 10 further includes a third die 13 provided with a third shaping post 10f. The third die 13 is connected with the second die 12. The third shaping post 10f extends into the second cavity 10e1 and a fourth extrusion gap 10c4 is defined between the third shaping post 10f and the second sidewall 10e2.

The third die 13 and the second die 12 may also be detachably connected with each other. For example, the bolt 15 shown in FIG. 1 extends through the first die 11, the second die 12 and the third die 13 to fasten and connect the first die 11, the second die 12 and the third die 13. In some embodiments, the third die 13 and the second die 12 may also be fastened and connected separately by the bolt 15.

In some other embodiments, the third die 13 and the second die 12 may also be non-detachably connected with each other. For example, the third die 13 may be welded to the second die 12.

In an embodiment, referring to FIG. 19 to FIG. 22, the extrusion die 10 includes a fourth die 14 provided with a fourth shaping post 10g. The fourth shaping post 10g is connected with the first die 11, the fourth shaping post 10g extends into the first cavity 10a, and a fifth extrusion gap 10c5 communicating with the first extrusion gaps 10c1 is defined between the fourth shaping post 10g and the plurality of first shaping posts 10d.

The fourth die 14 and the first die 11 may also be detachably connected with each other. For example, the fourth die 14 and the first die 11 shown in FIG. 19 are fastened and connected by bolts 15. In some other embodiments, the fourth die 14 and the first die 11 may also be non-detachably connected with each other. For example, the fourth die 14 may be welded to the first die 11.

That is, the second die 12, the third die 13, and the fourth die 14 may all be used in conjunction with the first die 11 to combine different extrusion dies 10. Especially when the first die 11, the second die 12, the third die 13, and the fourth die 14 are all detachable structures, only one first die 11 needs to be provided to be used in combination with the second die 12, the third die 13, and the fourth die 14, such that the versatility for the first die 11 may be improved and thus the cost for the extrusion die 10 may be reduced.

In some other embodiments, the extrusion die 10 may not be provided with the first die 11, the second die 12, the third die 13, and the fourth die 14. For example, the extrusion die 10 may be an integral structure in which the corresponding shaping posts and extrusion gaps 10c are formed.

In the description of the present disclosure, the description for the reference expressions "in an embodiment", "in some embodiments", "in some other embodiments", "in yet some other embodiments", "for example", or the like refers to that specific features, structures, materials, or characteristics described in connection with the embodiment or example are included in at least one embodiment or example of the present disclosure. In the present disclosure, the illustrative description for the above expressions do not necessarily refer to the same embodiment or example. Further, the described specific features, structures, materials or characteristics may be combined in a suitable manner in any one or more embodiments or examples. Further, those skilled in the art may combine different embodiments or examples described in the present disclosure and features of different embodiments or examples without conflicting.

The above descriptions are merely preferred embodiments of the present disclosure, and are not intended to limit the present disclosure, and various modifications and variations may be made by those skilled in the art. Any modification, equivalent replacement and improvement made within the spirit and scope of the present disclosure all fall within the protection scope of the present disclosure.

## Claims

1. An extrusion die for producing an aerosol generating article, comprising:
a first cavity provided with a first sidewall, at least one type of extrusion gap being provided in the first cavity, and the extrusion gap comprising a first extrusion gap; and
a plurality of first shaping posts arranged on the first sidewall, the plurality of first shaping posts being arranged at intervals along a circumferential direction of the first cavity, each of the plurality of first shaping posts protruding into the first cavity, and the first extrusion gap being defined between two adjacent first shaping posts.

2. The extrusion die of claim 1, wherein a width of each of the plurality of first shaping posts on a side close to the first sidewall is less than a width of the respective first shaping post on a side away from the first sidewall.

3. The extrusion die of claim 2, wherein each of the plurality of first shaping posts comprises a rod part and a body part, the rod part is provided between the first sidewall and the body part; and a width of the rod part is less than a width of the body part.

4. The extrusion die of claim 3, wherein a spacing between two adjacent body parts gradually increases or remains unvaried from a side close to the first sidewall to a side away from the first sidewall.

5. The extrusion die of claim 1, wherein a width of each of the plurality of first shaping posts gradually decreases or remains unvaried from a side close to the first sidewall to a side away from the first sidewall.

6. The extrusion die of any one of claims 1 to 5, wherein the plurality of first shaping posts have a same shape; or at least part of the plurality of first shaping posts have different shapes.

7. The extrusion die of any one of claims 1 to 5, wherein the plurality of first shaping posts are uniformly or non-uniformly distributed along the circumferential direction of the first cavity.

8. The extrusion die of any one of claims 1 to 5, wherein the extrusion gap further comprises a second extrusion gap and a third extrusion gap, the extrusion die further comprises a second shaping post provided with a plurality of second extrusion gaps, the plurality of second extrusion gaps are disposed within the first cavity and extend in an extrusion direction of the extrusion die, the third extrusion gap in communication with a plurality of first extrusion gaps is defined between the second shaping post and the plurality of first shaping post; the plurality of second extrusion gaps extend through the second shaping post in the extrusion direction, and each of the plurality of second extrusion gaps communicates with the third extrusion gap.

9. The extrusion die of claim 8, wherein a side of each of the plurality of second extrusion gaps communicates with the third extrusion gap, and opposite sides of the plurality of second extrusion gap communicate with each other at a central position of the second shaping post; and/or
wherein the extrusion gap includes a fourth extrusion gap, the second shaping post is provided with a second cavity having a second sidewall, the plurality of second extrusion gaps surround a peripheral side of the second cavity and communicate with the second cavity respectively; the extrusion die further comprises a third shaping post disposed within the second cavity, the third shaping post extends in the extrusion direction and the fourth extrusion gap is defined between the third shaping post and the second sidewall.

10. The extrusion die of any one of claims 1 to 5, wherein the extrusion gap comprises a fifth extrusion gap, the extrusion die further comprises a fourth shaping post disposed within the first cavity, the fourth shaping post extends in an extrusion direction of the extrusion die, and the fifth extrusion gap is defined between the fourth shaping post and the plurality of first shaping posts, and the fifth extrusion gap communicates with the plurality of first extrusion gaps.

11. The extrusion die of any one of claims 1 to 5, wherein widths of all extrusion gaps are same; or
wherein for all extrusion gaps, at least one type of extrusion gap has a width that is less than a width of another type of extrusion gap, and a width of an extrusion gap with a minimum width is not less than 70% of a width of an extrusion gap with a maximum width.

12. The extrusion die of claim 11, wherein a width of each extrusion gap is in a range of 0.1mm to 1.2mm.

13. The extrusion die of any one of claims 1 to 5, further comprising a first die, wherein the first die is provided with the first cavity and the plurality of first shaping posts.

14. The extrusion die of claim 13, wherein one end of the first cavity is provided with a discharge outlet, and the plurality of first shaping posts are disposed at the discharge outlet.

15. The extrusion die of claim 13, wherein the extrusion gap comprises a second extrusion gap and a third extrusion gap, the extrusion die comprises a second die provided with a second shaping post, the second shaping post has a plurality of second extrusion gaps, the plurality of second extrusion gaps extend through the second shaping post in an extending direction of the second shaping post, and each of the plurality of second extrusion gaps extends through an outer sidewall of the second shaping post; and
wherein the second die is connected with the first die, the second shaping post protrudes into the first cavity, a third extrusion gap is defined between the second shaping post and the plurality of first shaping posts, and the third extrusion gap communicates with the plurality of first extrusion gaps and the plurality of second extrusion gaps, respectively.

16. The extrusion die of claim 15, wherein the extrusion gap comprises a fourth extrusion gap, the second shaping post is provided with a second cavity having a second sidewall, and the plurality of second extrusion gaps surround a peripheral side of the second cavity; and
wherein the extrusion die further comprises a third die provided with a third shaping post, the third die is connected with the second die, the third shaping post extends into the second cavity, and a fourth extrusion gap is defined between the third shaping post and the second sidewall.

17. The extrusion die of claim 13, wherein the extrusion gap further comprises a fifth extrusion gap, the extrusion die further comprises a fourth die provided with a fourth shaping post, the fourth shaping post connects with the first die, the fourth shaping post extends into the first cavity, a fifth extrusion gap is defined between the fourth shaping post and a plurality of the first shaping posts and the fifth extrusion gap communicates with the plurality of first extrusion gaps.
